# EUROPÄISCHE PATENTSCHRIFT

(11) **EP 0 529 187 B1**
(45) Veröffentlichungstag und Bekanntmachung des Hinweises auf die Patenterteilung: **21.02.1996**
(21) Anmeldenummer: 92104279.2
(22) Anmeldetag: 12.03.1992
(51) Int. Cl.: B29B 17/00, B29C 47/10, B29C 47/50, B29C 47/84

(54) **Vorrichtung zur Herstellung von monodispersem Pulver aus Gummi oder aus Gummiartikeln**
Apparatus for producing a monodisperse powder from rubber
Appareil pour la production de poudre monodisperse en élastomère

(30) Priorität: 29.08.1991 DE 4128630
(43) Veröffentlichungstag der Anmeldung: 03.03.1993
(73) Patentinhaber: HERMANN BERSTORFF Maschinenbau GmbH, D-30627 Hannover (Kleefeld) (DE)
(72) Erfinder: Mayer, Dieter, Dipl.-Ing., W-3000 Hannover 91 (DE); Freist, Burkhard, Dipl.-Ing., W-3000 Hannover 1 (DE)

(56) Entgegenhaltungen:
- EP-A- 0 398 242
- GB-A- 1 167 850
- US-A- 2 836 851
- US-A- 4 607 796
- US-A- 4 997 137

## Beschreibung

Die Erfindung betrifft eine Vorrichtung zur Herstellung von monodispersem Pulver aus Gummi oder aus Gummiprodukten gemäß dem Oberbegriff von Anspruch 1.

Zur wirtschaftlichen Wiederverwertung von Gummiabfällen oder Gummiprodukten müssen diese zu einem möglichst feinförnigem und monodispersem Pulver zermahlen werden. Dieses Pulver ist dann bei der Herstellung neuer Gummiartikel als hochwertiger Füll- oder Zuschlagstoff mit Erfolg einsetzbar. Ein solches Gummirecycling erlaubt einerseits das Abfallaufkommen zu reduzieren und andererseits einen wertvollen Rohstoff in den Produktionskreislauf zurückzuführen.

Die bisher bekannt gewordenen Verfahren und Vorrichtungen zur Pulverisierung derartiger Polymere konnten vom Ergebnis her nicht befriedigen. So ist zum Beispiel aus der DE-OS 21 45 728 ein Verfahren zur Herstellung von wiederverwendbarem Gummi oder Kautschuk aus Gummiabfall bekannt, bei dem der Gummiabfall mit einem kryogenen Medium in Kontakt gebracht und dadurch auf eine Temperatur von unter -40°C abgekühlt wird. Die eintretende Materialversprödung ermöglicht eine leichtere mechanische Zerkleinerung bis hin zu feinkörnigem Pulver, ohne daß die einzelnen Gummikörner miteinander agglomerieren. Nachteilig bei diesem und anderen mit einer Materialversprödung durch Abkühlung arbeitenden Verfahren ist, daß sie einen sehr hohen Energieaufwand erfordern, der das Gummipulver als Rohstoff für neue Gummiartikel zu teuer werden läßt.

Außerdem ist aus der DE-OS 23 15 587 eine Vorrichtung zum Pulverisieren von Gummimaterial bekannt, bei dem das Gummimaterial zwischen einem Rotor mit ellipsenförmigem Querschnitt und einem diesem umgebenden Gehäuse eingegeben wird. Durch Drehen des Rotors, relativ zum Gehäuse, werden auf das Gummimaterial Scher- und Reibungskräfte ausgeübt, die dieses in einem kontinuierlichen Fluß zu Partikel gewünschter Größe aufbrechen. Gemäß einer bevorzugten Ausführungsform soll das Gummimaterial dann besonders wirkungsvoll zu pulverisieren sein, wenn es unter Druck in das Gehäuse eingebracht oder in dieses gestopft wird und dabei der Außendurchmesser der Gehäuseinnenwand ständig verändert wird.

Die mit diesem und ähnlichen Vorrichtungen gewonnenen Erfahrungen waren nicht befriedigend. So war einerseits der mechanische Aufwand für eine nach diesem Verfahren wirtschaftlich arbeitenden Anlage mit variablem Gehäuseinnendurchmesser zu groß, andererseits wies das derartig hergestellte Gummipulver nicht die gewünschte feinkörnige und weitgehend monodisperse Korndurchmesserverteilung auf. Dies ist vor allem auf eine unzureichende Wärmeabfuhr aus dem Mahlgut zurückführbar, wodurch bereits feinkörnig gemahlene Gummiteilchen wieder zu größeren Körnern agglomerieren. Außerdem ließ die für die Verwertung dieses Gummipulvers notwendige Siebung die Kosten für ein solches Pulver stark ansteigen.

Demnach besteht die Aufgabe der Erfindung darin, eine Vorrichtung vorzustellen, mit der kostengünstig ein feinkörniges Pulver aus Gummi oder Gummiprodukten herstellbar ist, bei dem die Pulverkörner in Bezug auf ihren mittleren Korndurchmesser eine nur geringe Streuung aufweisen.

Diese Aufgabe wird durch die Vorrichtung mit den Merkmalen des Anspruchs 1 gelöst. Vorteilhafte Weiterbildungen und Ausgestaltungen der Erfindung sind den Unteransprüchen entnehmbar.

Von besonderer Bedeutung für die Effektivität der vorgeschlagenen Vorrichtung ist, daß das Mahlgut nach jedem Mahlvorgang im Extruder aus diesem entfernbar und einer dem jeweiligen Extruderabschnitt zugeordneten Kühleinheit zuleitbar ist. In dieser Kühleinheit läßt sich das Gummi nach dem Verlassen eines jeden Mahlabschnittes soweit abkühlen, daß eine Agglomeration des schon fein gemahlenen Gummipulveranteils sicher vermieden werden kann. Das so auf eine Temperatur von etwa 20 - 80 ° C abgekühlte Mahlgut kann dann in die nächste Förder- und Mahlzone des Extruders eingespeist werden, wo dieses bis zur thermischen Agglomerationsgrenze noch feiner mahlbar ist.

In einer vorteilhaften Ausführungsform besteht die Kühleinheit aus einer Kühlwendelfördervorrichtung, in der das Mahlgut auf einen oszillierenden Förderwendel vertikal nach oben gefördert und dabei aktiv über Kühlkanäle in der Förderwendel oder passiv über die umgebende Luft gekühlt wird. In einer anderen Ausführungsform ist der vertikale Transport und die Mahlgutkühlung auch mit einem Gebläse oder einer Luft-Gegenstromkühlvorrichtung denkbar, bei der die Mahlgutpartikel oberhalb des Extruders in einem Feststoffabscheider gesammelt und der Einfüllöffnung des nächsten Extruderabschnittes zuführbar sind.

Zur günstigen Anwendung beider Kühl- und Transportsysteme sind die Austragsöffnungen des Extruders auf dessen Unterseite angeordnet, so daß das Mahlgut allein aufgrund der Schwerkrafteinwirkung und dem Druck des nachfolgenden Extrudates den Extruder verläßt.

Um einen Weitertransport des Mahlgutes im Extruder von einer Austragszone zur nächsten Förderzone zu verhindern, kann im Extrudergehäuse am stromaufwärtigen Ende einer jeden Förderzone eine Blende vorgesehen werden, die mit dem Gehäuse fest verbunden ist und lediglich Durchlaßöffnungen für den oder die Schneckenkern(e) aufweist.

Mit Hilfe der Zeichnung läßt sich eine Ausführungsform der Erfindung erläutern.

Es zeigen:
- Fig. 1: eine schematische Seitenansicht eines aufgeschnittenen Doppelschneckenextruders mit Blick auf eine seiner Schnecken,
- Fig. 2: eine Ansicht A-A gemäß Fig. 1.

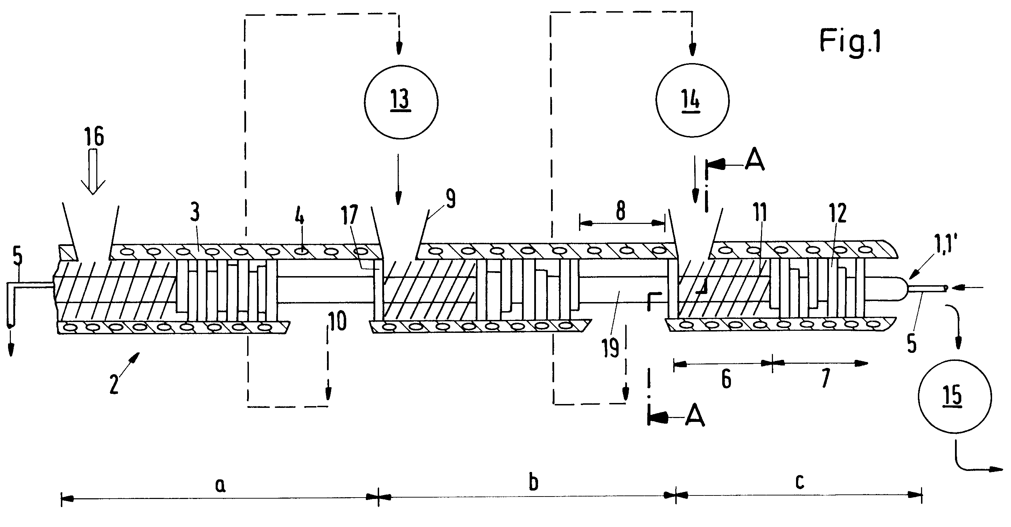

Die in Fig. 1 dargestellte Seitenansicht des Doppelschneckenextruders 2 macht deutlich, daß es bei der Gummipulverisierung entscheidend darauf ankommt, mit einer Pulverisierungsvorrichtung zu arbeiten, mit der einerseits das Mahlgut mechanisch zerkleinerbar und mit der andererseits die durch den Zerkleinerungsvorgang in das Mahlgut eingetragene thermische Energie wieder abführbar ist. Der Extruder 2 verfügt daher über ein Gehäuse 3 mit Kühlkanälen 4 sowie über Extruderschnecken 1, 1' mit Kühlkanälen 5 im Schneckenkern 19. Diese Kühlvorrichtungen 4, 5 reichen aber allein nicht aus, um ein Agglomerieren der bereits fein gemahlenen Gummiteilchen zu verhindern. Die vorgeschlagene Vorrichtung verfügt daher über weitere Kühlvorrichtungen 13, 14, 15, durch die das Mahlgut kontinuierlich hindurch transportiert, gekühlt und dem Extruder wieder zugeführt wird.

Der hier dazu vorgesehene Doppelschneckenexruder 2 besteht im wesentlichen aus dem bereits erwähnten kühlbaren Gehäuse 3 und den kühlbaren Extruderschnecken 1, 1' sowie einem nicht dargestellten Extruderantrieb. Mit Hilfe dieses Antriebes sind die Extruderschnecken 1, 1' gleichsinnig drehend und dicht kämmend antreibbar.

Der Extruder läßt sich in mehrere identisch aufgebaute Extruderabschnitte a, b, c aufteilen, in denen jeweils eine Förderzone 6, eine Mahlzone 7 und eine Ausstoßzone 8 ausgebildet ist. Jeder Förderzone 6 ist eine Einfüllöffnung 9 und jeder Austragszone 8 eine Austragsöffnung 10 im Extrudergehäuse 3 zugeordnet.

Die Extruderschnecken 1, 1' verfügen in der Förderzone 6 eines jeden Extruderabschnittes a, b, c über förderwirksame Schneckenstege 11 und in jeder Mahlzone 7 über mahl- und förderwirksame Schneckenstege 12. Im Bereich der Austragszonen 8 bestehen die Extruderschnecken 1, 1' lediglich aus ihren steglosen Schneckenkernen 19.

In einer speziellen Ausbildung der Erfindung sind die Gehäuseeinfüllöffnungen 9 auf der Oberseite und die Austragsöffnungen 10 auf der Unterseite des Extrudergehäuses angeordnet, wenngleich die Austragsöffnung 10 am stromabwärtigen Ende des Extruders in Förderrichtung öffnend ausgebildet sein kann.

Zur Vermeidung eines ungewollten Mahlguttransportes im Extruder von einer Austragszone zur nächsten Förderzone unter Umgehung der extruderexternen Kühleinheit ist im Extrudergehäuse 3 unmittelbar stromauf vor der Förderzone eine etwa brillenförmige Blende 17 befestigt, die die Schneckenkerne 19 dicht umfaßt und den Verarbeitungsraum des Extruders stromabwärts absperrt.

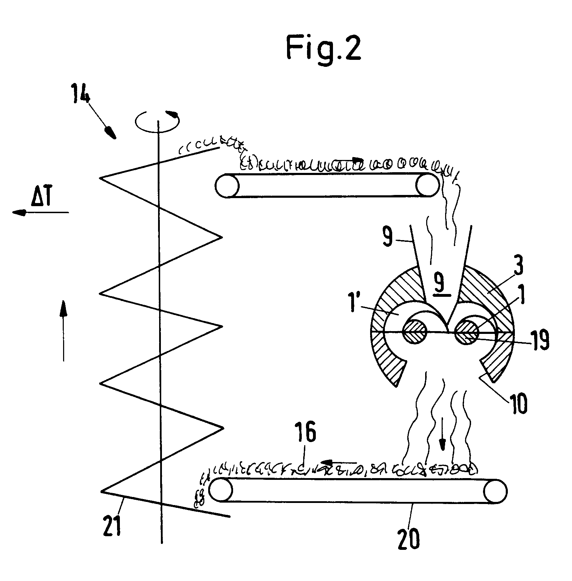

Die neben dem Doppelschneckenextruder zur Gummipulverisierungsvorrichtung gehörenden Kühleinheiten 13, 14, 15 sind außerhalb des erwähnten Extruders 2 angeordnet und ermöglichen die Kühlung und den Transport (gestrichelte Pfeile) des Mahlgutes 16 von einer Austragsöffnung 10 eines stromaufwärtigen Extruderabschnittes zu einer Einfüllöffnung 9 des nächsten stromabwärtigen Extruderabschnittes (Fig. 2). Lediglich die letzte Kühleinheit 15 transportiert das fertige Mahlgut 16 zu einer nachgeordneten und hier nicht dargestellten Verpackungsvorrichtung.

Wie in Fig. 2 dargestellt, können die Kühleinheiten 13, 14, 15 als Kühlwendelfördervorrichtungen 21 oder als Luft-Gegenstromkühlvorrichtungen ausgebildet sein, mit denen das Mahlgut 16 auf den für den Förder- und Mahlvorgang in dem nächsten Extruderabschnitt auf die dazu notwendige Temperatur abgekühlt wird. Falls notwendig, können weitere Fördervorrichtungen 20 (z.B. Förderbänder) für den Mahlguttransport zwischen der jeweiligen Austragsöffnung des Extruders und der zugehörigen Kühleinheit sowie zwischen der den Kühleinheiten und zugehörigen Einfüllöffnung des Extruders verwendet werden.

In einer weiteren Ausgestaltung der Erfindung kann in den Kühleinheiten oder diesen nachgeschalteten zusätzlichen Vorrichtungen bereits eine Abscheidung von ausreichend fein gemahlenem Mahlgut erfolgen (z. B. Siebung oder Sichtung). Zur optimalen Auslastung der einzelnen Extruderabschnitte kann die abgeschiedene Mahlgutmasse durch eine entsprechende Masse grobkörnigen Mahlgutes ersetzt werden, die zusätzlich in eine oder mehrere Einfüllöffnungen eingebracht wird.

In einer verschlechterten Ausführungsform der Erfindung kann auch vorgesehen sein, den Extruder und/oder die Extruderschnecke ohne Kühlvorrichtung zu realisieren. In diesem Fall wird die gesamte Kühlleistung durch die Kühleinheiten aufgebracht.

## Patentansprüche

1. Vorrichtung zur Herstellung von monodispersem Pulver aus Gummi oder Gummiartikeln, mit einem Extruder (2), dessen Extrudergehäuse (3) und Extruderschnecke (1) über Kühlkanäle (4, 5) temperierbar sind,
**dadurch gekennzeichnet,**
daß der Extruder (2) in mehrere Abschnitte (a, b, c) mit Förder-, Mahl- und Austragszonen (6, 7, 8) aufgeteilt ist,
daß jede dieser Abschnitte (a, b, c) eine Einfüll- und eine Austragsöffnung (9, 10) aufweist,
daß in jeder dieser Abschnitte (a, b, c) im Bereich der Einfüllöffnung (9) die Extruderschnecke (1) mit förderwirksamen Schneckenstegen (11), stromabwärts davon mit mahl- und förderwirksamen Schneckenstegen (12) und im Bereich der Austragsöffnung (10) ohne Schneckenstege ausgebildet sind, und
daß jedem Abschnitt (a, b, c) eine förderwirksame Kühleinheit (13, 14, 15) außerhalb des Extruders (2) zugeordnet ist, mit deren Hilfe das Mahlgut (16) von der Austragsöffnung (10) des jeweiligen Abschnittes zur Einfüllöffnung (9) des stromabwärts folgenden Abschnittes kühlbar transportierbar ist.

2. Vorrichtung nach Anspruch 1,
**dadurch gekennzeichnet,**
daß die Kühleinheiten (13, 14, 15) als Kühlwendelfördervorrichtungen ausgebildet sind.

3. Vorrichtung nach Anspruch 1,
**dadurch gekennzeichnet,**
daß die Kühleinheiten (13, 14, 15) aus Luft-Gegenstromkühlvorrichtung mit Feststoffabscheider bestehen.

4. Vorrichtung nach Anspruch 1,
**dadurch gekennzeichnet,**
daß die Austragsöffnungen (10) des Extruders (2) auf dessen Unterseite angeordnet sind.

5. Vorrichtung nach Anspruch 1,
**dadurch gekennzeichnet,**
daß im Extrudergehäuse (3) am stromaufwärtigen Ende jeder Förderzone (6) eine die Zuförderung von Mahlgut aus der stromaufwärtigen Austragszone (8) verhindernde Blende (17) befestigt ist.

6. Vorrichtung nach einem oder mehreren der vorherigen Ansprüche,
**dadurch gekennzeichnet,**
daß jeder Kühleinheit (13, 14, 15) eine Vorrichtung zur Sichtung und/oder Siebung des Mahlgutes nachgeordnet ist, mit der Teilfraktionen des Mahlgutes dem Pulverisierungsvorgang entzogen werden, und
daß eine diese Teilfraktionsmasse ersetzende Masse gröberer Fraktion einer oder mehreren der Einfüllöffnungen (9) zuführbar ist.

7. Vorrichtung nach einem oder mehreren der vorherigen Ansprüche,
**dadurch gekennzeichnet,**
daß der Extruder (2) ein Doppelschneckenextruder mit gleich- oder gegensinnig antriebbaren Schnecken (1, 1') ist.

8. Vorrichtung nach Anspruch 1,
**dadurch gekennzeichnet,**
daß der Extruder (2) ohne Kühlvorrichtungen (4, 5) für das Extrudergehäuse (3) und/oder die Extruderschnecke(n) (1, 1') ausgebildet ist.

## Claims

1. An apparatus for the production of monodisperse powder from rubber or rubber articles by means of an extruder (2), the housing (3) and extruder screw (1) of which can be cooled via cooling channels (4, 5),
**characterized in that**
the extruder (2) is divided into several sections (a, b, c) with conveying, grinding and discharge zones (6, 7, 8), each of these sections (a,b, c) in the area of the feed opening (9) the extruder screw (1) is designed with conveying screw flights (11), equipped downstreamswise with grinding and conveying screw flights ((12), and without any screw flights in the discharge opening (10) of the respective section to the feed opening (9) of the next section downstream.

2. An apparatus as recited in claim 1,
**chracterized in that**
the cooling units (13, 14, 15) are designed as cooling spiral conveying devices.

3. An apparatus as recited in claim 1,
**characterized in that**
the cooling units (13, 14, 15) consist of a countercurrent air cooling device with a solid matter separa tor.

4. An apparatus as recited in claim 1,
**characterized in that**
the discharge openings (10) of the extruder (2) are arranged on its bottom side.

5. An apparatus as recited in claim 1,
**characterized in that**
a plate (17) that prevents the conveyance of the ground stock from the upstream discharge zone (8) is arranged at the upstream end of each conveying zone (6) in the housing (3).

6. An apparatus as recited in one or more of the preceding claims,,
**characterized in that**
a device for classifying and/or screening the ground stock is arranged subsequently to each cooling unit (13, 14, 15) extracting partial fractions of the ground stock from the pulverisation process and that a quantity of a coarser fraction substituting the extracted partial fraction can be fed into one or several feed openings (9).

7. An apparatus as recited in one or moore of the preceding claims,
**characterized in that**
the extruder (2) is designed as a twin-screw extruder the screws (1, 1') of which can be driven such as to co-rotate or counter-rotate.

8. An apparatus as recited in claim 1,
**chracterized in that**
the extruder (2) is not designed with cooling devices (4, 5) for the extruder housing (3) and/or the extruder screw(s) (1, 1')

## Revendications

1. Dispositif pour la production de poudre monodisperse à base de caoutchouc ou d'articles en caoutchouc, avec une extrudeuse (2) dont le carter d'extrudeuse (3) et la vis d'extrudeuse (1) sont thermoréglables par des canaux de refroidissement (4, 5),
**caractérisé en ce que**
l'extrudeuse (2) est divisée en plusieurs sections (a, b, c) avec des zones de transport, de broyage et de décharge (6, 7, 8),
chacune de ces sections (a, b, c) est munie d'une ouverture d'alimentation et de décharge (9, 10),
dans chacune de ces sections (a, b, c) au niveau de l'ouverture d'alimentation (9), la vis d'extrudeuse (1) dispose de sommets de filets (11) effectuant le transport et, à leur aval, de sommets de filets (12) effectuant le broyage et le transport, et au niveau de l'ouverture de décharge (10), elle est conçue sans sommets de filet, et
en ce que
une unité de refroidissement (13, 14, 15) effectuant le transport est attribuée à chaque section (a, b, c) à l'extérieur de l'extrudeuse (2), grâce à laquelle la matière à broyer (16) peut être transportée et refroidie, de l'ouverture de décharge (10) de la section correspondante jusqu'à l'ouverture d'alimentation (9) de la section suivante en aval.

2. Dispositif selon la revendication 1,
**caractérisé en ce que**
les unités de refroidissement (13, 14, 15) sont conçues comme des transporteurs helicoïdaux de refroidissement.

3. Dispositif selon la revendication 1,
**caractérisé en ce que**
les unités de refroidissement (13, 14, 15) se composent de dispositifs de refroidissement à contre-courant d'air avec des séparateurs de la matière solide.

4. Dispositif selon la revendication 1,
**caractérisé en ce que**
les ouvertures de décharge (10) de l'extrudeuse (2) sont disposées sur sa surface inférieure.

5. Dispositif selon la revendication 1,
**caractérisé en ce que**
dans le carter de l'extrudeuse (3), il est monté, en amont de l'extrémité de chaque zone de transport (6), un obturateur (17) évitant l'amenée de la matière à broyer venant de la zone de décharge en amont (8).

6. Dispositif selon une ou plusieurs des revendications ci-dessus,
**caractérisé en ce que**
un dispositif pour la classification et/ou le tamisage de la matière à broyer est monté en aval de chaque unité de refroidissement (13, 14, 15), grâce auquel des fractions partielles de la matière à broyer sont exclues du processus de pulvérisation et
en ce que
une masse de fraction plus grosse remplaçant cette masse de fraction partielle peut être introduite dans une ou plusieurs ouvertures d'alimentation (9).

7. Dispositif selon une ou plusieurs des revendications ci-dessus,
**caractérisé en ce que**
l'extrudeuse (2) est une extrudeuse double-vis avec des vis à entraînement co-rotatif ou contrarotatif (1, 1').

8. Dispositif selon la revendication 1,
**caractérisé en ce que**
l'extrudeuse (2) est conçue sans dispositifs de refroidissement (4, 5) pour le carter d'extrudeuse (3) et/ou la/les vis d'extrudeuse (1, 1').
